# EUROPEAN PATENT SPECIFICATION

(11) **EP 2 418 439 B1**
(45) Date of publication and mention of the grant of the patent: **20.02.2019**
(21) Application number: 11177528.4
(22) Date of filing: 13.08.2011
(51) Int. Cl.: F24T 10/10, F28F 3/12, F28D 20/00

(54) **Geothermal system**
Geothermisches System
Système géothermique

(30) Priority: 13.08.2010 IT BO20100520
(43) Date of publication of application: 15.02.2012
(73) Proprietor: Universita' degli Studi di Ferrara, 44100 Ferrara (IT)
(72) Inventor: Bottarelli, Michele, 44124 Ferrara (IT)
(74) Representative: Bergadano, Mirko

(56) References cited:
- DE-A1- 3 202 201
- DE-A1-102008 028 488
- DE-U1-202005 009 635
- GB-A- 981 546
- JP-A- 2001 004 232
- US-A- 4 106 555
- US-A- 4 279 294

## Description

The present invention relates to a geothermal system for environmental air-conditioning.

In particular, the present invention relates to a geothermal system defined, generally, as being of a horizontal type and comprising a geothermal exchanger designed to be buried in diggings of small depth, for example in trenches of up to a couple of metres deep.

It is known that a geothermal system is installed within an air-conditioning plant so as to exploit exchange of heat with the ground for heating or else cooling an environment the temperature of which is, according to the seasons, opposite to that of the external air. In this way, both the costs of air-conditioning of the environment and the consumption of exhaustible energy sources, such as methane, are reduced, likewise limiting the diffused emissions of products of combustion. It should be noted that a geothermal system of a known type moreover presents the advantage of exchanging energy with a source with a rather stable daily temperature since the temperature of the ground undergoes, already at a limited depths, minor daily thermal variations which are much less marked than the variations of other sources, such as for example air.

It is known, for example by US4106555A, that a geothermal system of the type described above commonly comprises a geothermal exchanger having a circuit formed by a plurality of tubular bodies with circular cross section hydraulically connected to one another. A geothermal exchanger of the known type presents the drawback of having a yield of heat exchange per unit length that is relatively low. Consequently, generally the geothermal exchanger is buried vertically for limiting the encumbrance on the surface and frequently down to considerable depths (geothermal system of a vertical type), with the consequent disadvantage of having to make deep drillings, thus considerably complicating the operations of installation and maintenance. Vertical drilling can moreover lead to mixing between aquifers of different qualities, thus constituting a potential source of contamination.

It is also known by DE3202201A1 a geothermal system comprising a geothermal exchanger designed to be buried and having the shape of a parallelepiped. This geothermal exchanger comprises one or more inserts which do not delimit a duct for the flow of the thermovector fluid. This type of geothermal exchanger presents the drawback of having a reduced yield of heat exchange, in particular when the flow of the thermovector fluid is very slow and in the cooling mode.

The aim of the present invention is to provide a geothermal system comprising a geothermal exchanger that has a yield of heat exchange per unit length higher than geothermal exchangers of a known type and that is designed to be used in the horizontal arrangement. Furthermore, the aim of the present invention is to provide a geothermal exchanger with a high yield of heat exchange per unit higher than geothermal exchangers of a known type both in warming and in cooling mode.

According to the present invention, a geothermal exchanger is provided according to what is specified in Claim 1 and, preferably, in any one of the subsequent claims that depend directly or indirectly upon Claim 1.

The invention will now be described with reference to the annexed drawings, which illustrate a non-limiting example of embodiment thereof and in which:
- Figure 1 is a schematic view with parts removed for reasons of clarity of a preferred embodiment of the geothermal system according to the present invention;
- Figure 2 illustrates a cross section according to the line II-II of a detail of Figure 1; and
- Figure 3 is similar to Figure 2 and illustrates the detail of Figure 1 in an operative configuration.

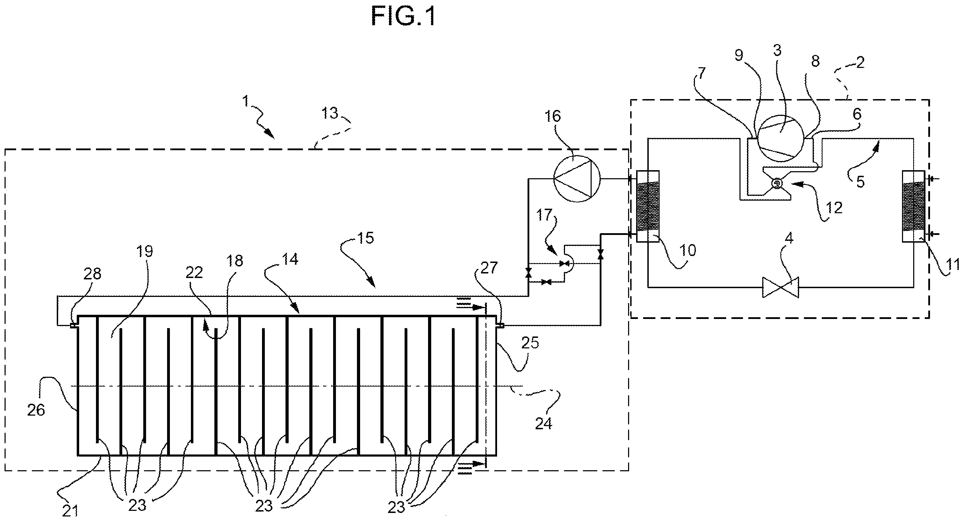

In Figure 1, designated as a whole by 1 is a geothermal plant, i.e., a plant for environmental air-conditioning, comprising a geothermal system 13 and a thermal utility 2, which is designed to exchange heat with the geothermal system 13.

According to what is illustrated in Figure 1, the thermal utility 2 is defined by a heat pump 2, which, in a schematic and non-limiting form, comprises a compressor 3, an expansion valve 4, a pair of heat exchangers 10 and 11, and a hydraulic circuit 5, which in turn comprises a pair of branches 6 and 7, which connect the valve 4 to the inlet 8 and the outlet 9, respectively, of the compressor 3 and each of which traverses a respective heat exchanger 10 and 11.

According to what is illustrated in Figure 1, the heat pump 2 is of the reversing type, comprising a reversing valve 12 for varying the direction of advance of the thermovector fluid through the hydraulic circuit 5. It should be noted that, according to the direction of advance of the thermovector fluid along the hydraulic circuit 5, the heat exchangers 10 and 11 perform, alternatively, the function of condenser or else of evaporator.

According to what is illustrated in Figure 1, the geothermal system 13 comprises at least one geothermal exchanger 14, a circulator 16, and a hydraulic circuit 15, which connects the geothermal exchanger 14 with a heat exchanger 10 (or alternatively 11) of the heat pump 2. According to the embodiment illustrated in Figure 1, the hydraulic circuit 15 is in communication with the heat exchanger 10, while the heat exchanger 11 is designed to exchange heat with the environment to be air-conditioned.

The hydraulic circuit 15 further comprises a reversing system 17 for reversal of the thermovector fluid for adjusting the direction of advance of the thermovector fluid through the geothermal exchanger 14. According to a variant (not illustrated), the hydraulic circuit 15 is without the reversing system 17, and the thermovector fluid is designed to traverse the hydraulic circuit 15 according to the direction of advance imparted by the circulator 16.

The geothermal system 13 further comprises a control system (not illustrated) designed to adjust operation of the reversing system 17 according to the thermal conditions of the ground and/or the air-conditioning requirements of the environment.

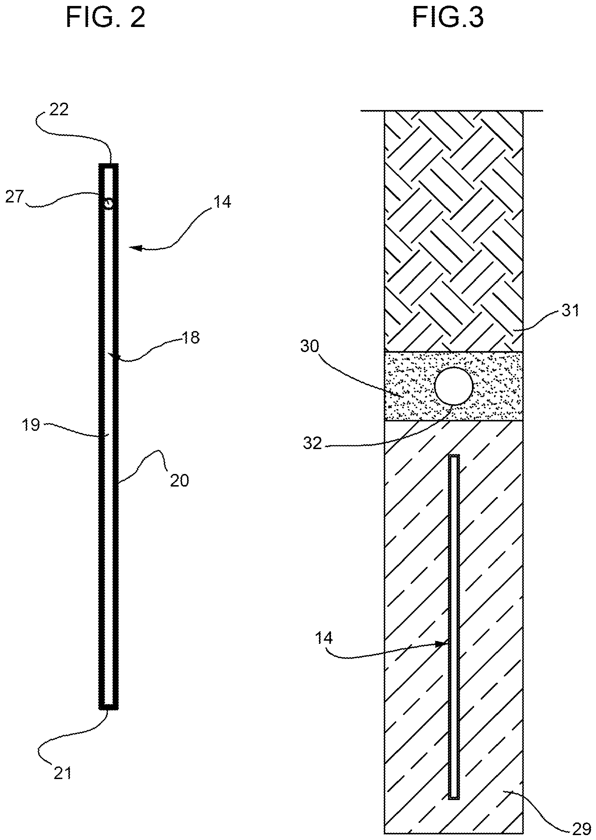

According to what is illustrated in Figure 2, the geothermal exchanger 14 has a boxlike body delimiting an internal cavity 18 and substantially having the shape of a right-angle parallelepiped.

The geothermal exchanger 14 comprises a pair of side walls 19 and 20 of larger dimensions, a bottom wall 21, a top wall 22, one or more inserts 23, and has a longitudinal axis 24. The geothermal exchanger 14 further comprises a pair of walls perpendicular to the longitudinal axis 24 and referred to hereinafter as "front wall 25" and "rear wall 26". Finally, the geothermal exchanger 14 has a front opening 27 made on the front wall 25 and a rear opening 28 made on the rear wall 26. Preferably, the front opening 27 and the rear opening 28 are coaxial and have an axis parallel to the longitudinal axis 24. The inserts 23 are designed to reinforce the structure of the geothermal exchanger 14. In particular the inserts 23 are designed to exert on the side walls 19 and 20 resistant forces designed to counter the thrust that the ground could exert on the geothermal exchanger 14 installed.

The inserts 23 are moreover designed to cause a turbulent motion of the thermovector fluid that traverses the cavity 18 of the geothermal exchanger 14 itself. An insert 23 can be made of different shapes; for example, it can have a cylindrical or else plane shape; hereinafter, by way of example, reference is made to an insert 23 formed as a wall and referred to as "internal wall 23".

According to what is illustrated in Figure 1, each internal wall 23 is, in the specific but non-limiting case, transverse and perpendicular to the longitudinal axis 24 and is fixed with its own longitudinal edges to both of the side walls 19 and 20 of larger dimensions of the geothermal exchanger 14.

The internal walls 23 are uniformly distributed along the longitudinal axis 24, and two adjacent internal walls 23 project in cantilever fashion, alternatively, from the bottom wall 21 and from the top wall 22 so as to delimit within the geothermal exchanger 14 a duct for passage, which has the shape of a coil and hydraulically connects the front opening 27 with the rear opening 28.

According to what is illustrated in Figure 2, the maximum distance between the side walls 19 and 20 of larger dimensions of the geothermal exchanger 14 is considerably smaller than the dimensions of the side walls 19 and 20 themselves.

Preferably, the geothermal exchanger 14 is sized in such a way that the following conditions are respected:
- the ratio between the extension along the axis 24, i.e., the base of the geothermal exchanger 14, of a side wall 19 (20) and the extension along a first axis perpendicular to the axis 24, i.e., the height of the geothermal exchanger 14, of the side wall 19 (20) itself is greater than 1; and
- the ratio between the extension of the front wall 25 (or rear wall 26) along a second axis perpendicular to the axis 34, i.e., the depth of the geothermal exchanger 14, and the height of a side wall 19 (20) is smaller than 1/10.

The geothermal exchanger 14 is made of plastic or metal material. In the first case, the geothermal exchanger 14 is made of polyethylene or else polypropylene obtained with known techniques of processing of plastics, for example moulding or else extrusion. Alternatively, the geothermal exchanger is made of metal material.

According to a variant (not illustrated), the geothermal system 13 comprises a plurality of geothermal exchangers 14 hydraulically connected to one another in series and/or in parallel.

Preferably, each geothermal exchanger 14 is built as a modular unit. For example, the front wall 25 and the rear wall 27 of a geothermal exchanger 14 are complementary to one another so as to enable, in the presence of a pair of geothermal exchangers 14 mounted in series, hydraulic connection between the front opening 27 of a first geothermal exchanger 14 with the rear opening 28 of a second geothermal exchanger 14.

In use, according to what is illustrated in Figure 3, the geothermal exchanger 14 is buried in a layer of soil 29 and is then coated by a layer of draining material 30, which, in turn, is covered over by a layer of soil 31. Set within the layer of draining material 30 is a perforated pipe 32 designed to moisten the draining material and hence the soil. Preferably, the perforated pipe 32 is connected to a system for recovery of rainwater.

The layer of soil 29 differs from the layer of soil 31 to provide a possible conditioning designed to improve the thermal conductivity, for example through mixing with bentonite.

During operation of the geothermal system 13, the thermovector fluid that flows in the hydraulic circuit 15 exchanges heat with the ground through the geothermal exchanger 14 and is directed to the heat pump 2 in an area corresponding to the heat exchanger 10, which, according to the type of use of the reversible heat pump 2, acts as condenser or else as evaporator.

In use, the shape and dimensions of the internal coil of the geothermal exchanger 14 and the extensive surface of the geothermal exchanger 14 itself determine a yield of heat exchange per unit length greater than the yield of heat exchange of a geothermal exchanger of a known type installed in a geothermal system even of a vertical type.

From what has been set forth above it follows that a geothermal exchanger 14 of the type described above can be installed in a geothermal system 13, thus combining the advantages represented by the simplicity of installation and maintenance of the arrangement of a horizontal type with the advantage of a yield of heat exchange per unit length higher than that of a geothermal exchanger of a known type.

## Claims

1. A geothermal exchanger designed to be buried and to exchange heat with an external utility (2) for a geothermal system; wherein the geothermal exchanger (14) has the shape of a parallelepiped and has an internal cavity (18), a front opening (27) and a rear opening (28); the geothermal exchanger (14) comprising a plurality of inserts (23), which are arranged within the cavity (18) and are designed to divert a flow directed through the geothermal exchanger (14) itself, a top wall (22), a bottom wall (21) and a pair of side walls (19, 20) of larger dimensions; each insert (23) is fixed with respect to both of said side walls (19, 20) of larger dimensions so as to participate in the structural strength of the side walls (19, 20); the geothermal exchanger (14) **being characterized in** a pair of adjacent inserts (23) a first insert (23) projects from the bottom wall (21) and a second insert (23) projects from the top wall (22) so as to delimit within the geothermal exchanger (14) a duct for passage, which has the shape of a coil and hydraulically connects the front opening (27) with the rear opening (28).

2. A geothermal exchanger according to Claim 1, wherein the geothermal exchanger (14) is made at least in part of polyethylene or polypropylene or metal.

3. A geothermal system comprising a hydraulic circuit (15) and one or more geothermal exchangers (14) according to one of the preceding claims, which are hydraulically connected to the hydraulic circuit (15) .

4. A geothermal system according to Claim 3, and wherein the hydraulic circuit (15) comprises a valve system (17) designed to determine selectively the direction of advance of a thermovector fluid through the geothermal exchanger (14).

5. A geothermal system according to claim 3 or4, wherein the thermal utility is defined by a reversible heat pump (2) which comprises a heat exchanger (10; 11) and wherein each geothermal exchanger (14) is hydraulically connected to said heat exchanger (10; 11).

## Patentansprüche

1. Ein Erdwärmetauscher bzw. Geothermietauscher, der ausgelegt ist, um mit einer externen Anlage (2) für ein Erdwärmesystem vergraben zu sein und Wärme auszutauschen; wobei der Erdwärmetauscher (14) die Form eines Parallelepipeds und einen inneren Hohlraum (18), eine Vorderöffnung (27) und eine Hinteröffnung (28) hat; wobei der Erdwärmetauscher (14) eine Vielzahl von Einsätzen (23) aufweist, die innerhalb des Hohlraums (18) angeordnet sind und dazu ausgelegt sind, einen Strom umzuleiten, der durch den Erdwärmetauscher (14) selbst, eine obere Wand (22), eine untere Wand (21) und ein Paar von Seitenwänden (19, 20) mit größeren Dimensionen gerichtet ist; wobei jeder Einsatz (23) bezüglich beider Seitenwände (19, 20) mit größeren Dimensionen fixiert ist, um in der strukturalen Festigkeit der Seitenwände (19, 20) teilzuhaben; wobei der Erdwärmetauscher (14) **gekennzeichnet ist durch** ein Paar von benachbarten Einsätzen (23), einen ersten Einsatz (23), der von der unteren Wand (21) vorspringt und einen zweiten Einsatz (23), der von der oberen Wand (22) vorspringt, um innerhalb des Erdwärmetauschers (14) einen Durchgangskanal abzugrenzen, der die Form einer Spule hat und hydraulisch die Vorderöffnung (27) mit der Hinteröffnung (28) verbindet.

2. Erdwärmetauscher nach Anspruch 1, wobei der Erdwärmetauscher (14) wenigstens teilweise aus Polyethylen oder Polypropylen oder Metall hergestellt ist.

3. Erdwärmesystem bzw. Geothermiesystem, das einen Hydraulikkreis (15) und einen oder mehrere Erdwärmetauscher (14) nach einem der vorhergehenden Ansprüche aufweist, die hydraulisch mit dem Hydraulikkreis (15) verbunden sind.

4. Erdwärmesystem nach Anspruch 3, und wobei der Hydraulikkreis (15) ein Ventilsystem (17) aufweist, das ausgelegt ist, um die Flussrichtung eines Thermo-Vektorfluids durch den Erdwärmetauscher (14) selektiv zu bestimmen.

5. Erdwärmesystem nach Anspruch 3 oder 4, wobei die thermische Anlage durch eine reversible Wärmepumpe (2) definiert ist, die einen Wärmetauscher (10; 11) aufweist, und wobei jeder Erdwärmetauscher (14) hydraulisch mit dem Wärmetauscher (10; 11) verbunden ist.

## Revendications

1. Échangeur géothermique conçu pour être enterré et pour échanger de la chaleur avec une installation externe (2), destiné à un système géothermique ; dans lequel l'échangeur géothermique (14) a forme d'un parallélépipède et présente une cavité interne (18), une ouverture avant (27) et une ouverture arrière (28) ; l'échangeur géothermique (14) comprenant une pluralité d'inserts (23) qui sont disposés à l'intérieur de la cavité (18) et qui sont conçus pour faire dévier un écoulement dirigé à travers l'échangeur thermique (14) lui-même, une paroi supérieure (22), une paroi inférieure (21) et une paire de parois latérales (19, 20) de plus grandes dimensions ; chaque insert (23) est fixe par rapport à l'une et l'autre desdites parois latérales (19, 20) de dimensions plus grandes, de manière à contribuer à la résistance structurale des parois latérales (19, 20); l'échangeur géothermique (14) étant **caractérisé par** une paire d'inserts adjacents (23) un premier insert (23) fait saillie par rapport à la paroi inférieure (21) et un second insert (23) fait saillie par rapport à la paroi supérieure (22) de manière à délimiter à l'intérieur de l'échangeur géothermique (14) un conduit de passage qui a la forme d'une bobine et qui relie hydrauliquement l'ouverture avant (27) à l'ouverture arrière (28).

2. Échangeur géothermique selon la revendication 1, dans lequel l'échangeur géothermique (14) est constitué au moins en partie de polyéthylène ou de polypropylène ou encore de métal.

3. Système géothermique comprenant un circuit hydraulique (15) et un ou plusieurs échangeur(s) géothermique(s) (14) selon l'une des revendications précédentes, qui est ou sont hydrauliquement relié(s) au circuit hydraulique (15).

4. Système géothermique selon la revendication 3, et dans lequel le circuit hydraulique (15) comprend un système de vanne (17) conçu pour déterminer de manière sélective le sens de déplacement d'un fluide thermovecteur à travers l'échangeur géothermique (14).

5. Système géothermique selon la revendication 3 ou 4, dans lequel l'installation thermique est définie par une pompe à chaleur réversible (2) qui comprend un échangeur de chaleur (10; 11) et dans lequel chaque échangeur géothermique (14) est hydrauliquement relié audit échangeur thermique (10 ; 11).
